(19) Europäisches Patentamt
European Patent Office
Office européen des brevets

(11) **EP 4 376 477 B1**

(12) **EUROPEAN PATENT SPECIFICATION**

(45) Date of publication and mention
of the grant of the patent:
**01.04.2026 Bulletin 2026/14**

(21) Application number: **23832670.6**

(22) Date of filing: **21.02.2023**

(51) International Patent Classification (IPC):
*H04W 28/02* (2009.01)   *H04W 52/24* (2009.01)
*H04W 52/04* (2009.01)   *H04W 52/20* (2009.01)
*H04W 52/14* (2009.01)   *H04W 52/26* (2009.01)
*H04W 52/36* (2009.01)   *H04W 72/54* (2023.01)
*H04W 72/044* (2023.01)

(52) Cooperative Patent Classification (CPC):
**H04W 52/04; H04W 52/146; H04W 52/20;
H04W 52/24; H04W 52/241; H04W 52/267;
H04W 52/367;** Y02D 30/70

(86) International application number:
**PCT/CN2023/077506**

(87) International publication number:
**WO 2024/077832 (18.04.2024 Gazette 2024/16)**

(54) **DATA TRANSMISSION METHOD, PROGRAM PRODUCT AND ELECTRONIC DEVICE**

DATENÜBERTRAGUNGSVERFAHREN, PROGRAMMPRODUKT UND ELEKTRONISCHE VORRICHTUNG

PROCÉDÉ DE TRANSMISSION DE DONNÉES, PRODUIT-PROGRAMME ET DISPOSITIF ÉLECTRONIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.10.2022 CN 202211227082**

(43) Date of publication of application:
**29.05.2024 Bulletin 2024/22**

(73) Proprietor: **Honor Device Co., Ltd.
Shenzhen, Guangdong 518040 (CN)**

(72) Inventors:
• **SHI, Shaohong**
  **Shenzhen, Guangdong 518040 (CN)**
• **LIU, Qing**
  **Shenzhen, Guangdong 518040 (CN)**
• **DOU, Zhitong**
  **Shenzhen, Guangdong 518040 (CN)**
• **WU, Yan**
  **Shenzhen, Guangdong 518040 (CN)**

(74) Representative: **Beder, Jens
Mitscherlich PartmbB
Karlstraße 7
80333 München (DE)**

(56) References cited:
WO-A1-2013/127699    CN-A- 101 977 097
CN-A- 105 392 162    CN-A- 106 455 033
CN-A- 112 468 264    CN-A- 113 115 333
CN-A- 115 334 584    US-A1- 2005 152 321
US-A1- 2014 362 723    US-A1- 2018 270 765
US-A1- 2019 028 970

## Description

This application claims priority to Chinese Patent Application No. 202211227082.4, filed with the China National Intellectual Property Administration on October 9, 2022 and entitled "DATA TRANSMISSION METHOD, PROGRAM PRODUCT, AND ELECTRONIC DEVICE".

## TECHNICAL FIELD

This application relates to the field of communication technologies, and in particular, to a data transmission method, a program product, and an electronic device.

## BACKGROUND

With the rapid development of wireless communication technologies (wifi), a wireless network has become inseparable from people's lives. Nowadays, almost all terminal devices such as smartphones, tablets, and laptops support wireless network access. With the development of mobile terminals in a direction of more intelligent, higher integration, and stronger functions, service integration of mobile terminal products is getting higher, and there are more scenarios where a user is provided with more network services through a terminal device, such as video calls, playing games, studying.

However, when the user is provided with network services through the terminal device, the terminal device only transmits at maximum transmit power corresponding to a determined transmission rate during network transmission, and there is insufficient consideration of uplink power consumption of the terminal device during usage of the user.

Document CN 101 977 097 A describes a method used for adjusting the sending rate and the sending power of remote TDMA wireless transmission.

## SUMMARY

The invention is defined in the independent claims. Additional features of the invention are provided in the dependent claims. In the following, parts of the description and drawings referring to embodiments which are not covered by the claims are not presented as embodiments of the invention, but as examples useful for understanding the invention. A purpose of embodiments of this application is to provide a data transmission method, a program product, and an electronic device. A network and a wireless environment are monitored in real time. It is determined that a network transmission status satisfies a first condition, in response to that current first transmit power is greater than lower limit power of a first transmit power range corresponding to a first transmission rate, the first transmit power is reduced to second transmit power. It is determined that the network transmission status does not satisfy the first condition is determined, and network transmission parameters are adjusted to enable the network transmission status to satisfy the first condition. Therefore, data can be transmitted at minimum transmit power when satisfying the first condition, thereby reducing corresponding uplink power consumption of the electronic device during data transmission.

According to a first aspect that is not covered by the subject-matter of the claims, an embodiment of this application provides a data transmission method, applied to an electronic device, including:

determining that a network transmission status satisfies a first condition; and
reducing the first transmit power to second transmit power in response to that current first transmit power is greater than lower limit power of a first transmit power range corresponding to a current first transmission rate; or
determining that the network transmission status does not satisfy the first condition; and
adjusting network transmission parameters to enable the network transmission status to satisfy the first condition.

It may be understood that, during data transmission, an uplink throughput of the electronic device changes as a network and a wireless environment change in real time. Therefore, during data transmission, data can be transmitted at minimum transmit power within an adjustable range of transmit power corresponding to a current transmission rate while an optimal uplink throughput is satisfied, so that uplink power consumption of the electronic device during data transmission is reduced, thereby enabling the electronic device to transmit in a short time while reducing power consumption and saving power. It may be understood that, if the current network transmission parameters, that is, the transmission rate and the transmit power, do not satisfy the optimal throughput when transmitting data, the network transmission parameters need to be adjusted to achieve the optimal throughput, and then the transmit power is adjusted to transmit at the minimum transmit power when the optimal throughput is ensured, so that when a maximum throughput is ensured, power consumption of the electronic device is smaller than power consumption when transmitting data at original larger transmit power.

In a possible implementation of the foregoing first aspect, whether the network transmission status satisfies the first condition is determined by using the following methods:

determining, when data is transmitted at the first transmission rate and the first transmit power, whether an obtained first packet error ratio is less than an error ratio threshold;

in response to that the first packet error ratio is less than the error ratio threshold, determining whether the first transmit power is greater than the lower limit power of the first transmit power range corresponding to the first transmission rate; and

in response to that the first transmit power is greater than the lower limit power of the first transmit power range, determining that the network transmission status satisfies the first condition.

It may be understood that a packet error ratio that can reflect changes of a throughput is used as a determination condition, which is convenient and reasonable. When a received packet error ratio satisfies the error ratio threshold, it is further determined whether the current transmit power can be further adjusted within the adjustable range of the current transmit power corresponding to the current rate. If possible, the transmit power can be reduced, and the transmit power can be further adjusted at the minimum transmit power for transmitting when a throughput is ensured, thereby reducing power consumption.

In a possible implementation of the foregoing first aspect, whether the network transmission status satisfies the first condition is determined by using the following methods:

determining, when data is transmitted at the first transmission rate and the first transmit power, whether an obtained first packet error ratio is less than an error ratio threshold;

in response to that the first packet error ratio is less than the error ratio threshold, determining whether the first transmit power is greater than the lower limit power of the first transmit power range corresponding to the first transmission rate; and

in response to that the first transmit power is equal to the lower limit power of the first transmit power range, determining that the network transmission status does not satisfy the first condition.

It may be understood that, a packet error ratio that can reflect changes of a throughput is used as a determination condition. When a received packet error ratio satisfies the error ratio threshold, it is further determined whether the current transmit power can be further adjusted within the adjustable range of the current transmit power corresponding to the current rate. If impossible, the network transmission parameters need to be adjusted, and the transmit power can be further adjusted at the minimum transmit power for transmitting when a throughput is ensured, thereby reducing power consumption.

In a possible implementation of the foregoing first aspect, the adjusting the network transmission parameters includes:

increasing the first transmission rate to a second transmission rate, and adjusting the first transmit power to third transmit power, where the third transmit power is upper limit power of a third transmit power range corresponding to the second transmission rate.

It may be understood that, in some embodiments, the transmission rate may be increased to further explore whether the current transmission rate is a transmission rate to ensure the optimal throughput, so that data can be transmitted at the minimum transmit power when a throughput is ensured, thereby reducing power consumption.

In a possible implementation of the foregoing first aspect, whether the network transmission status satisfies the first condition is determined by using the following methods:

determining, when data is transmitted at the first transmission rate and the first transmit power, whether an obtained first packet error ratio is less than an error ratio threshold;

in response to that the first packet error ratio is greater than the error ratio threshold, determining whether the first transmit power is less than an upper limit power of the first transmit power range corresponding to the first transmission rate; and

in response to that the first transmit power is less than the upper limit power of the first transmit power range corresponding to the first transmission rate, determining that the network transmission status does not satisfy the first condition.

It may be understood that, a packet error ratio that can reflect changes of a throughput is used as a determination condition. When a received packet error ratio does not satisfy the error ratio threshold, indicating a smaller current throughput, it is further determined whether the current transmit power can be further adjusted within the adjustable range of the current transmit power corresponding to the current rate. If possible, the network transmission parameters need to be adjusted, so that when a throughput is ensured, the transmit power is minimized, thereby reducing power consumption.

In a possible implementation of the foregoing first aspect, the adjusting the network transmission parameters includes:

increasing the first transmit power to fourth transmit power.

It may be understood that, in some cases, increasing the transmit power can reduce a received packet error ratio, enabling the packet error ratio to satisfy a condition of the error ratio threshold, so that a throughput is ensured while satisfying a demand for the possible minimum transmit power, thereby reducing power consumption.

In a possible implementation of the foregoing first aspect, whether the network transmission status satisfies the first condition is determined by using the following methods, including:

determining, when data is transmitted at the first transmission rate and the first transmit power, whether an obtained first packet error ratio is less than an error ratio threshold;

in response to that the first packet error ratio is greater than the error ratio threshold, determining whether the first transmit power is less than an upper limit power of the first transmit power range corresponding to the first transmission rate; and

in response to that the first transmit power is equal to the upper limit power of the first transmit power range corresponding to the first transmission rate, determining that the network transmission status does not satisfy the first condition.

It may be understood that, a packet error ratio that can reflect changes of a throughput is used as a determination condition. When a received packet error ratio does not satisfy the error ratio threshold, indicating a smaller current throughput, it is further determined whether the current transmit power can be further adjusted within the adjustable range of the current transmit power corresponding to the current rate. If impossible, the network transmission parameters need to be adjusted. To be specific, the transmission rate and the transmit power are adjusted, thereby ensuring the throughput.

In a possible implementation of the foregoing first aspect, the adjusting the network transmission parameters includes:

reducing the first transmission rate to a third transmission rate, and adjusting the first transmit power to fifth transmit power, where the fifth transmit power is upper limit power of a fifth transmit power range corresponding to the third transmission rate.

In may be understood that, in some cases, a throughput can be increased by reducing the transmission rate and transmitting data at maximum transmit power corresponding to the reduced transmission rate.

In a possible implementation of the foregoing first method, further including:

starting, when detecting that a current moment reaches a start time of a detection period, to determine whether a current network transmission status satisfies the first condition.

According to a second aspect, an embodiment of this application provides a data transmission method, applied to an electronic device, including:

transmitting data at a fourth transmission rate and sixth transmit power;

determining that a network transmission status satisfies a second condition;

in response to that the network transmission status does not satisfy the second condition,

determining a fifth transmission rate and seventh transmit power that enable total transmission power consumption to satisfy a power consumption condition; and

transmitting data at the fifth transmission rate and the seventh transmit power.

It may be understood that, during data transmission, uplink transmission power consumption of the electronic device changes as a network and a wireless environment change in real time. In some cases that total transmission power consumption of terminal data needs to be ensured to be the lowest, if a network and a wireless environment do not change, data can be transmitted at an original transmission rate and transmit power; if the network and the wireless environment change, a corresponding transmission rate and transmit power enabling the power consumption condition to be satisfied may change. Therefore, a corresponding transmission rate and the transmit power enabling the power consumption condition to be satisfied in a current wireless and network environment need to be determined. Then, when data is transmitted at the corresponding transmission rate and the transmit power enabling the power consumption condition to be satisfied, the total uplink power consumption is minimized, thereby minimizing power consumption of the electronic device and prolonging battery life.

In a possible implementation of the foregoing second aspect, whether the network transmission status satisfies the second condition is determined by using the following methods, including:

determining, when the data is transmitted at the fourth transmission rate and the sixth transmit power, whether a currently obtained first received signal-to-noise ratio is the same as a previously obtained second received signal-to-noise ratio;

in response to that the first received signal-to-noise ratio is the same as the previously obtained second received signal-to-noise ratio, determining that the network transmission status satisfies the second condition; and

in response to that the first received signal-to-noise ratio is different from the previously obtained second received signal-to-noise ratio, determining that the network transmission status does not satisfy the second condition.

It may be understood that it is convenient to determine current changes in the wireless and network environment based on changes in a received signal-to-noise ratio. In addition, it should be explained that the received signal-to-noise ratio is a signal-to-noise ratio obtained periodically or regularly. The previously obtained second received signal-to-noise ratio is a signal-to-noise ratio detected in a previous period.

In a possible implementation of the foregoing second aspect, the determining a fifth transmission rate and seventh transmit power that enable total transmission power consumption to satisfy a power consumption condition includes:

determining, based on the first received signal-to-noise ratio, minimum transmit power that satisfies target signal-to-noise ratios corresponding to respective transmission rates and that is at respective transmission rates; and selecting, from the transmission rates and the minimum transmit power corresponding to the transmission rates, the fifth transmission rate and the seventh transmit power that enable the total transmission power consumption to satisfy the power consumption condition.

It may be understood that the minimum transmit power that satisfies the target signal-to-noise ratios corresponding to the transmission rates and that is at the transmission rates is determined based on the first received signal-to-noise ratio. A transmission rate and transmit power that enable the total transmission power consumption to satisfy the power consumption condition is selected from the transmission rates and the minimum transmit power corresponding to the transmission rates. In this case, the minimum transmit power may be less than maximum transmit power of the corresponding transmission rate. Therefore, when data is transmitted at the determined transmission rate and transmit power in this case, the total power consumption is further reduced.

In a possible implementation of the foregoing second aspect, the determining, based on the first received signal-to-noise ratio, minimum transmit power that satisfies target signal-to-noise ratios corresponding to respective transmission rates and that is at respective transmission rates includes:

determining, based on a difference between the first received signal-to-noise ratio and the sixth transmit power, a linear relationship between the target signal-to-noise ratio and the minimum transmit power; and determining, based on the linear relationship, the minimum transmit power that satisfies the target signal-to-noise ratios corresponding to the transmission rates and that is at the transmission rates.

In a possible implementation of the foregoing second aspect, the selecting the fifth transmission rate and the seventh transmit power that enable the total transmission power consumption to satisfy the power consumption condition includes:

calculating respective total transmission power consumption when the data is transmitted at respective transmission rates and the minimum transmit power corresponding to respective transmission rates, using a transmission rate that is corresponding to the total transmission power consumption satisfying the power consumption condition and that is in the total transmission power consumption as the fifth transmission rate, and using minimum transmit power corresponding to the fifth transmission rate as the seventh transmit power.

According to a third aspect, an embodiment of this application provides an electronic device, including:

one or more processors; and

one or more memories, where the one or more memories store one or more programs, and when the one or more programs are executed by the one or more processors, the electronic device is enabled to perform the data transmission method according to any one of the first aspect and the implementations of the first aspect, or perform the data transmission method according to any one of the second aspect and the implementations of the second aspect.

According to a fourth aspect, an embodiment of this application provides a computer-readable storage medium. The storage medium stores instructions, and when the instructions are executed on a computer, the computer is enabled to perform the data transmission method according to any one of the first aspect and the implementations of the first aspect, or perform the data transmission method according to any one of the second aspect and the implementations of the second aspect.

According to a fifth aspect, an embodiment of this application provides a computer program product. The computer program product includes instructions, and when the instructions are executed, a computer is enabled to perform the data transmission method according to any one of the first aspect and the implementations of the first aspect, or perform the data transmission method according to any one of the second aspect and the implementations of the second aspect.

According to a sixth aspect, this application provides a data transmission method, applied to an electronic device, including:

when data is transmitted at a first transmission rate and first transmit power, an obtained first packet error ratio is less than an error ratio threshold and the first transmit power is greater than lower limit power of a transmit power range corresponding to the first transmission rate, reducing the first transmit power to second transmit power.

In a possible implementation of the foregoing sixth aspect, when the data is transmitted at a second transmission rate and third transmit power, an obtained second packet error ratio is less than the error ratio threshold and the third transmit power is equal to lower limit power of a transmit power range corresponding to the second transmission rate, the second transmission rate is increased to the first transmission rate, and the data is transmitted at target transmit power corresponding to the first transmission rate, where the target transmit power is equal to upper limit power of the transmit power range corresponding to the first transmission rate.

In a possible implementation of the foregoing sixth aspect, the second transmit power is greater than or equal to the lower limit power of the first transmit power range corresponding to the first transmission rate.

In a possible implementation of the foregoing sixth aspect, when the data is transmitted at a third transmission rate and fourth transmit power, an obtained third packet error ratio is greater than the error ratio threshold and the fourth transmit power is less than upper limit power of a transmit power range corresponding to the third transmission rate, the fourth transmit power is increased to fifth transmit power.

In a possible implementation of the foregoing sixth aspect, when the data is transmitted at a fourth transmission rate and sixth transmit power, an obtained fourth packet error ratio is greater than the error ratio threshold and the sixth transmit power is equal to upper limit power of a transmit power range corresponding to the fourth transmission rate, the fourth transmission rate is reduced to a fifth transmission rate, and the sixth transmit power is adjusted to target power corresponding to the fifth transmission rate.

In a possible implementation of the foregoing sixth aspect, when detecting that a current moment reaches a start time of a detection period, a transmission rate and transmit power of a current network transmission status is started to be determined.

According to a seventh aspect, this application provides a data transmission method, applied to an electronic device, including:

transmitting data at a sixth transmission rate and seventh transmit power;
determining whether a network transmission status satisfies a first condition;
in response to that the network transmission status does not satisfy the first condition, determining a seventh transmission rate and eighth transmit power that enable total transmission power consumption to satisfy a power consumption condition; and
transmitting the data at the seventh transmission rate and the eighth transmit power, where
the first condition includes:

a currently obtained first received signal-to-noise ratio is the same as a previously obtained second received signal-to-noise ratio; and
the determining a seventh transmission rate and eighth transmit power that enable total transmission power consumption to satisfy a power consumption condition includes:

determining, based on the first received signal-to-noise ratio, minimum transmit power that satisfies target signal-to-noise ratios corresponding to respective transmission rates and that is at respective transmission rates; and
selecting, from the transmission rates and the minimum transmit power corresponding to the transmission rates, the seventh transmission rate and the eighth transmit power that enable the total transmission power consumption to satisfy the power consumption condition.

In a possible implementation of the foregoing seventh aspect, the determining, based on the first received signal-to-noise ratio, minimum transmit power that satisfies target signal-to-noise ratios corresponding to respective transmission rates and that is at respective transmission rates includes: determining, based on a difference between the first received signal-to-noise ratio and the seventh transmit power, a linear relationship between the target signal-to-noise ratio and the minimum transmit power; and determining, based on the linear relationship, the minimum transmit power that

# EP 4 376 477 B1

satisfies the target signal-to-noise ratios corresponding to the transmission rates and that is at the transmission rates.

In a possible implementation of the foregoing seventh aspect, the selecting the seventh transmission rate and the eighth transmit power that enable the total transmission power consumption to satisfy the power consumption condition includes: calculating respective total transmission power consumption when the data is transmitted at respective transmission rates and the minimum transmit power corresponding to respective transmission rates, using a transmission rate that is corresponding to the total transmission power consumption satisfying the power consumption condition and that is in the total transmission power consumption as the seventh transmission rate, and using minimum transmit power corresponding to the seventh transmission rate as the eighth transmit power.

According to an eighth aspect, an embodiment of this application provides an electronic device, including:

one or more processors; and
one or more memories, where the one or more memories store one or more programs, and when the one or more programs are executed by the one or more processors, the electronic device is enabled to perform the data transmission method according to any one of the implementations of the sixth aspect and the seventh aspect.

According to a ninth aspect, an embodiment of this application provides a computer-readable storage medium, including:

the storage medium stores instructions, and when the instructions are executed on a computer, the computer is enabled to perform the data transmission method according to any one of the sixth aspect and the implementations of the sixth aspect, or perform the data transmission method according to any one of the seventh aspect and the implementations of the seventh aspect.

## BRIEF DESCRIPTION OF DRAWINGS

FIG. 1 is a scenario in which a user sends a file to another person by using an instant messaging application in a mobile phone 100 according to some embodiments of this application;

FIG. 2 shows an implementation not covered by the subject-matter of the claims of a schematic diagram of a relationship between a transmission rate and a throughput when transmitting at specific transmit power corresponding to the transmission rate due to a packet error ratio during actual data transmission according to some embodiments of this application;

FIG. 3 shows an implementation not covered by the subject-matter of the claims of a diagram of a relationship between transmit power and a packet error ratio at a specific transmission rate according to some embodiments of this application;

FIG. 4A shows an implementation not covered by the subject-matter of the claims of a flow chart of a data transmission technical solution for transmitting data at minimum transmit power when an optimal throughput is ensured according to some embodiments of this application;

FIG. 4B shows an implementation not covered by the subject-matter of the claims of a schematic diagram of relationships between MCS6 and transmit power and between MCS5 and transmit power according to some embodiments of this application;

FIG. 4C shows an implementation not covered by the subject-matter of the claims of a schematic diagram of a relationship between MCS6 and transmit power and between MCS7 and transmit power according to some embodiments of this application;

FIG. 5 is a diagram of a relationship between a transmission rate and total power consumption according to some embodiments of this application;

FIG. 6A is a flow chart of a data transmission technical solution for transmitting data at minimum transmit power that satisfies a requirement of a specific signal-to-noise ratio when minimum total power consumption is ensured according to some embodiments of this application;

FIG. 6B is a schematic diagram of a linear relationship between a target signal-to-noise ratio and minimum transmit power when a network and wireless environment is determined according to some embodiments of this application;

FIG. 7 is uplink power consumption corresponding to each modulation order that minimum transmit power does not exceed target power according to some embodiments of this application; and

FIG. 8 is a schematic diagram of a hardware structure of a mobile phone 100 according to some embodiments of this application.

**DESCRIPTION OF EMBODIMENTS**

Illustrative embodiments of this application include, but are not limited to, a data transmission method, a program product, and an electronic device.

As obviously known and understood to a person skilled in the art, in the embodiments of this application, words such as "first" and/or "second" are used to distinguish between same items or similar items with basically the same functions and effects. For example, a first transmission rate and a second transmission rate are merely intended to distinguish between different transmission rates, and are not intended to define a specific sequence of different transmission rates. Obviously, the person skilled in the art may understand that the words such as "first" and "second" do not limit a quantity and an execution sequence, and the words such as "first" and "second" do not indicate a definite difference.

For ease of description, relevant terms of this application are first introduced.

(Uplink) throughput: It is an amount of data that an electronic device successfully transmits per unit time when transmitting data to a network device. In some embodiments of this application, that is, an amount of data successfully transmitted by a mobile phone 100 per unit time.

Packet error ratio (packet error ratio, PER): It is a proportion of packets that fail to be transmitted to transmitted packets during data transmission. In some embodiments of this application, that is, a part of packets that fail to be transmitted by a terminal device to a network device to packets that are sent. When packet transmission fails, a packet needs to be retransmitted during next transmission. Therefore, when the packet error ratio is too large, a throughput will be reduced, thereby taking more time to retransmit the data.

Target power: It is maximum transmit power that is set in advance in an electronic device and that can be emitted at the network transmission rates.

Signal-to-noise ratio SNR: Indicates a ratio of signal to noise in an electronic device or system.

$$SNR=10\lg(PS/PN)=10\lg PS-10\lg PN \quad \text{(Formula 1)}$$

PS and PN represent effective power of the signal and the noise, respectively. In some embodiments of this application, a received signal-to-noise ratio is a signal-to-noise ratio fed back by a received network device (for example, a router) after a terminal device transmits data at transmit power determined in a current environment. A target signal-to-noise ratio is a minimum signal-to-noise ratio theoretically needed when the terminal device maintains a specific packet error ratio and transmits data at a specific transmission rate. For example, the specific packet error ratio may be 10%, 5%, and the like.

It may be understood that the terminal device applicable to technical solutions of this application may be an electronic device such as a mobile phone, a tablet computer, a Vision product, an augmented reality (augmented reality, AR)/virtual reality (virtual reality, VR) device, a laptop, an ultra-mobile personal computer (ultra-mobile personal computer, UMPC), a netbook, or a personal digital assistant (personal digital assistant, PDA). It may be understood that a specific type of the electronic device is not limited in this embodiment of this application. A network device may be a base station, a hub, a switch, a bridge, a router, a gateway, a network interface card (NIC), a wireless access points (WAP), and another network device.

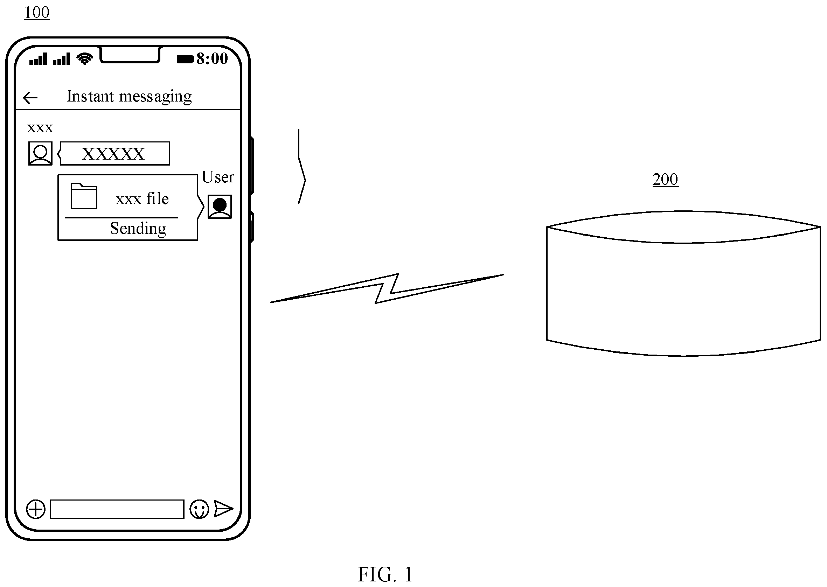

As mentioned above, there is currently insufficient consideration of power consumption of the terminal device during network transmission. For example, FIG. 1 shows a scenario in which a user sends a file to another person by using an instant messaging application in a mobile phone 100, data needs to be sent to a router 200, to use the router 200 for transmission. When the data is actually transmitted, the data is transmitted at target power of a transmission rate at any transmission rate, and there is insufficient consideration of power consumption.

Therefore, to reduce corresponding uplink power consumption of the terminal device during data transmission, an embodiment of this application provides a data transmission method. A transmission rate and transmit power that satisfy a specific condition is determined through real-time monitoring of a network and a wireless environment, and data is transmitted at minimum transmit power. The transmit power is often less than a previously mentioned target power that corresponds to the transmission rate, so that the power consumption of the terminal device can be effectively reduced.

Specifically, for example, in some cases that transmission time needs to be as short as possible, after a transmission rate corresponding to an optimal throughput of transmitting data based on a current network status and a wireless environment is determined, transmit power can be dynamically adjusted based on a relationship between a received packet error ratio and a packet error ratio threshold to minimize the transmit power. For another example, in some cases that total transmission power consumption of terminal data needs to be minimized, a plurality of transmission rates and minimum transmit power corresponding to the plurality of transmission rates that satisfy a requirement of a specific signal-to-noise ratio are determined in the current network and the wireless environment through real-time monitoring of the network and the wireless environment. Then a transmission rate that minimizes the total power consumption and minimum transmit power corresponding to the transmission rate. Therefore, the transmit power is adjusted in real time during uplink transmission of data by the terminal device, thereby avoiding unnecessary data transmission power consumption of the terminal device.

It should be explained that minimum transmit power determined based on a signal-to-noise ratio in a known network and a wireless environment is theoretical transmit power. In some embodiments of this application, when the network and the wireless environment are fixed (in other words, the network and the wireless environment do not change), after data is transmitted at the minimum transmit power determined based on a requirement of the signal-to-noise ratio, a signal-to-noise ratio fed back by a network device received by the terminal device satisfies the requirement of the signal-to-noise ratio.

The technical solutions of this application are described below with reference to specific embodiments.

Embodiment 1 (not covered by the subject-matter of the appended claims)

It may be understood that, as mentioned above, in some cases, because a network and a wireless environment change in real time, monitoring of the network and the wireless environment needs to be implemented. To ensure an optimal throughput of transmitting data, a transmission rate and transmit power can be adjusted based on a packet error ratio that can reflect a throughput change, so that when data is transmitted at the transmission rate and the corresponding transmit power, a throughput is optimal, and the corresponding transmit power is minimized. Therefore, after a transmission rate corresponding to the optimal throughput based on a condition of satisfying the packet error ratio is determined, transmit power can be adjusted within an adjustable range of the transmit power of the determined transmission rate, so that a throughput requirement is satisfied when data is transmitted at minimum transmit power, to reduce power consumption when transmission is completed in a short time, thereby saving power of the terminal device.

It may be understood that a throughput is related to a transmission rate.

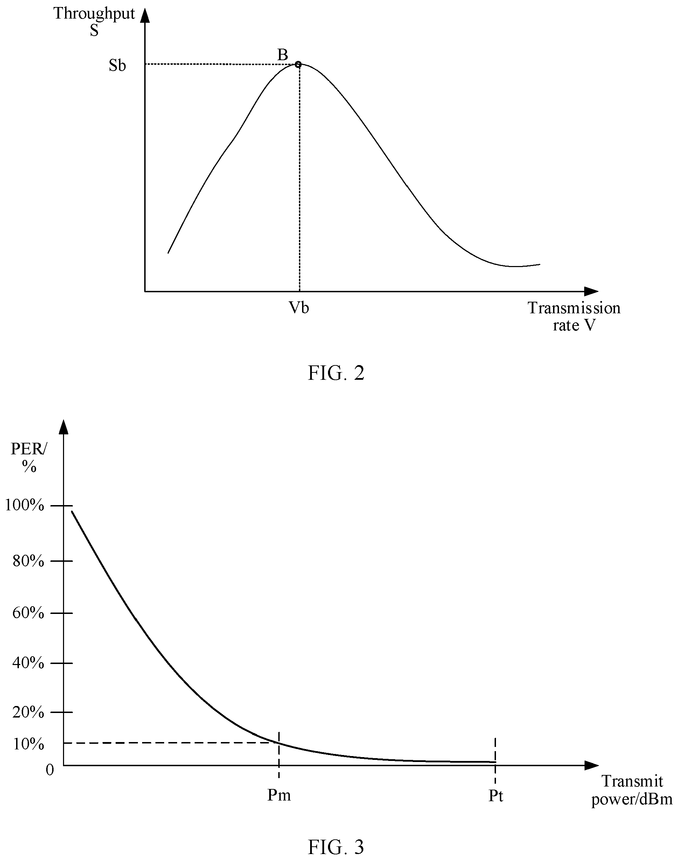

FIG. 2 is a schematic diagram of a qualitative change relationship between a transmission rate and a throughput during actual data transmission in a fixed network and a wireless environment, assuming that transmit power corresponding to the transmission rates is determined according to some embodiments of this application. It can be learnt from the figure, when a transmission rate V is less than Vb, packet error ratios are very small at the transmission rates. A throughput S increases with an increase of the transmission rate. When the transmission rate increases to Vb, the throughput is Sb. If the transmission rate continues to increase, the packet error ratio deteriorates sharply due to a limitation of a signal-to-noise ratio SNR. The throughput S decreases with the increase of the transmission rate, so that there may be an extreme point "B". When the transmission rate is Vb, the throughput is maximum.

It should be explained that because a network and a wireless environment change in real time, a specific value of the transmission rate Vb corresponding to the maximum throughput also changes.

It may be understood that some mobile terminal devices are transmitted based on a transmission rate specified by a modulation and coding scheme (Modulation and Coding Scheme, MCS). Generally, a mobile terminal device is configured with a MCS modulation and coding table corresponding to the modulation and coding scheme. The MCS modulation and coding table is a representation proposed by a communication standard protocol, such as an 802.11n protocol and an 802.11.ax protocol, to characterize a communication rate of WLAN. The MCS corresponds factors that is of interest to the MCS and that affect the communication rate to an MCS index to form a rate table. Therefore, each MCS index actually corresponds to physical transmission rates under a set of parameters. For ease of description, the following indexes with different numbers are referred to as modulation orders. For example, Table 1 shows a part of modulation orders and the corresponding transmission rate (Mbps) when a quantity of spatial flows is 1 and a bandwidth is 20 MHZ and a communication standard is 802.11.ax.

Therefore, a value of the transmission rate is any of discrete values of the transmission rate in the modulation index table. In addition, when starting to transmit data, to ensure the optimal throughput, the terminal device may negotiate with a network device an initial modulation order that satisfies signal quality in a current environment and initial transmit power. The initial transmit power is target power corresponding to the initial modulation order. For example, the transmission rate is a transmission rate of 77.4 Mbps corresponding to MCS6 in Table 1.

**Table 1**

| Modulation order | MCS0 | MCS1 | MCS2 | MCS3 | MCS4 | MCS5 | MCS6 | MCS7 | MCS8 | MCS9 | MCS10 | MCS11 |
|---|---|---|---|---|---|---|---|---|---|---|---|---|
| Transmission rate (Mbps) | 8.6 | 17.2 | 25.8 | 34.4 | 51.6 | 68.8 | 77.4 | 86 | 103.2 | 114.7 | 129 | 143.4 |

It may be understood that a transmission rate is determined based on a maximum throughput. Because the packet error ratio is related to the transmit power, for example, FIG. 3 is a diagram of a relationship between transmit power and a packet error ratio at a specific transmission rate in general according to some embodiments of this application. It can be learnt from the figure, the packet error ratio PER decreases rapidly with an increase of transmit power. When the transmit power increases to a value Pm, the packet error ratio is 10%. When the transmit power is increased to maximum transmit power (target power Pt), the packet error ratio PER decreases slowly. Therefore, in some embodiments of this application, it is considered that when data is transmitted at a transmission rate corresponding to a maximum throughput during constant changes of a network and a wireless environment, if transmit power is adjusted to enable a received packet error ratio to be less than or equal to a specific threshold, a value of the throughput within this range is considered to be similar (with a same quantity of order). In other words, a requirement of the maximum throughput is still met.

In may be understood that each modulation order has a corresponding adjustable transmit power range, within which a corresponding transmission rate may be maintained. An upper limit of the range is maximum transmit power (that is, target power). Therefore, during real-time changes of the wireless and network environment, when a transmission rate is determined when satisfying a requirement of a throughput, the transmit power can be adjusted in real time based on a relationship between the received packet error ratio measuring a current throughput and a corresponding threshold, so that data is transmitted at minimum transmit power in a condition of ensuring that the packet error ratio is satisfied, thereby reducing power consumption.

Table 2 shows target power and target signal-to-noise ratios corresponding to some modulation orders 0 to 9 in the 802.11.ax protocol. It may be understood that each modulation order has corresponding maximum transmit power (that is, target power) and a target signal-to-noise ratio (minimum signal-to-noise ratio) SNRm for the packet error ratio PER to be a specific value (for example, theoretically 0%). For example, if a transmission rate corresponding to the maximum throughput is a transmission rate corresponding to MCS6, and data is transmitted at the transmit power less than the target power (maximum transmit power), the received packet error ratio may be 0% to 10%, thereby reducing power consumption while a throughput is ensured.

**Table 2**

| Modulation order | QAM order | Target signal-to-noise ratio SNRm (dB) | Target power (dBm) |
|---|---|---|---|
| MCS0 | BPSK | 5 | 17 |
| MCS1 | QPSK | 10 | 17 |
| MCS2 | QPSK | 13 | 16 |
| MCS3 | 16QAM | 16 | 16 |
| MCS4 | 16QAM | 19 | 16 |
| MCS5 | 64QAM | 22 | 15 |
| MCS6 | 64QAM | 25 | 14 |
| MCS7 | 64QAM | 27 | 13 |
| MCS8 | 256QAM | 30 | 11 |
| MCS9 | 256QAM | 32 | 10 |

However, it should be explained that because during data transmission, the wireless and network environment changes in real time, so that the transmission rate changes. Therefore, based on a relationship between the received packet error ratio and a corresponding error ratio threshold, and a specific adjustable situation of the current transmit power, the transmission rate that ensures the maximum throughput is determined, and then after determining the transmission rate, the transmit power is continued to be adjusted at the received packet error ratio. It may be understood that the transmission rate corresponding to the maximum throughput is that, at the current transmission rate, when data is transmitted at transmit power in an adjustable range of the transmit power, an obtained packet error ratio is less than or equal to the error ratio threshold. In addition, if a minimum packet error ratio that may be obtained is less than or equal to the error ratio threshold when data is transmitted at the transmission rate, the received minimum packet error ratio needs to be greater than the error ratio threshold when data is transmitted at a rate greater than the transmission rate. For example, assuming that when data is transmitted at a transmission rate of 86 Mbps corresponding to MCS7, and when data is transmitted at maximum transmit power within the adjustable range of transmit power corresponding to the transmission rate, the received minimum packet error ratio is greater than the error ratio threshold. When data is transmitted at a transmission rate of 77.4 Mbps corresponding to MCS6 and transmit power less than or equal to target power of 14 dBm, the received packet error ratio is less than or equal to the error ratio threshold of 10%. It is considered that in the current environment, the transmission rate corresponding to MCS6 can ensure the maximum throughput.

It may be understood that when the corresponding maximum transmission rate of the throughput is determined based on the condition, within the adjustable range of the transmit power corresponding to the transmission rate, there may be transmit power that enables the received packet error ratio to satisfy a condition of a set error ratio threshold. Therefore, based on the foregoing example, the transmit power may be adaptively adjusted based on the received packet error ratio at the transmission rate corresponding to MCS6, so that the transmit power in each environment can be maintained close to the error ratio threshold. In this way, the transmit power is minimized.

It should be explained that when data is transmitted at an upper limit of the transmit power adjustable range corresponding to a current modulation order (for example, MCS6), the received packet error ratio is less than the error ratio threshold of 10%, an obtained throughput S1 is greater than a throughput S2 obtained when data is transmitted at the upper limit of the transmit power adjustable range corresponding to a higher order (for example, MCS7) and if the received packet error ratio is greater than the error ratio threshold of 10%.

Therefore, when starting to transmit data, to ensure the optimal throughput, the terminal device may negotiate with a network device an initial modulation order that satisfies signal quality in a current environment and initial transmit power. The initial transmit power is target power corresponding to the initial modulation order. Then, during data transmission, because the network and wireless environment changes, and the transmission rate corresponding to the maximum throughput may also change, the received packet error ratio is compared with the error ratio threshold. Before the transmit power is adjusted, whether the current transmit power reaches an upper limit needs to be determined when the received packet error ratio is greater than the error ratio threshold, and whether the current transmit power reaches a lower limit needs to be determined when the received packet error ratio is less than the error ratio threshold. If the current transmit power does not reach the upper limit and the lower limit in the corresponding cases, the transmit power is to be adjusted.

Because when the received packet error ratio is greater than the error ratio threshold, if the transmit power reached the upper limit, the minimum packet error ratio at the transmission rate is greater than the error ratio threshold, which indicates that the transmission rate is not the transmission rate with maximum throughput, the transmission rate is to be reduced. Then it is determined whether the received minimum packet error ratio of transmission at corresponding transmit power at a reduced transmission rate is less than or equal to the error ratio threshold. If so, it is determined that the reduced transmission rate corresponds to the transmission rate under the maximum throughput. Then the transmit power is adjusted in real time based on the received packet error ratio, so that the packet error ratio obtained when data is transmitted at minimum transmit power close to the error ratio threshold, thereby reducing power consumption. If not, the transmission rate is continued to reduce.

When the received packet error ratio is less than the error ratio threshold, if the transmit power reaches the lower limit, a maximum packet error ratio at the transmission rate is less than or equal to the error ratio threshold, and it needs to be determined that when transmitting at a rate greater than the current transmission rate, the minimum packet error ratio at the increased transmission rate is greater than the error ratio threshold. Then it is determined that the original transmission rate is the transmission rate corresponding to the maximum throughput. Otherwise, the transmission rate needs to be continued to be increased until the minimum packet error ratio obtained when data is transmitted at a specific transmission rate is less than or equal to the error ratio threshold, and the minimum packet error ratio obtained when data is transmitted at a rate greater than the transmission rate is greater than the error ratio threshold, to determine that the transmission rate is the transmission rate corresponding to the maximum throughput. Then the transmit power may be adjusted in real time based on the received packet error ratio, so that data is transmitted at the minimum transmit power, thereby reducing power consumption.

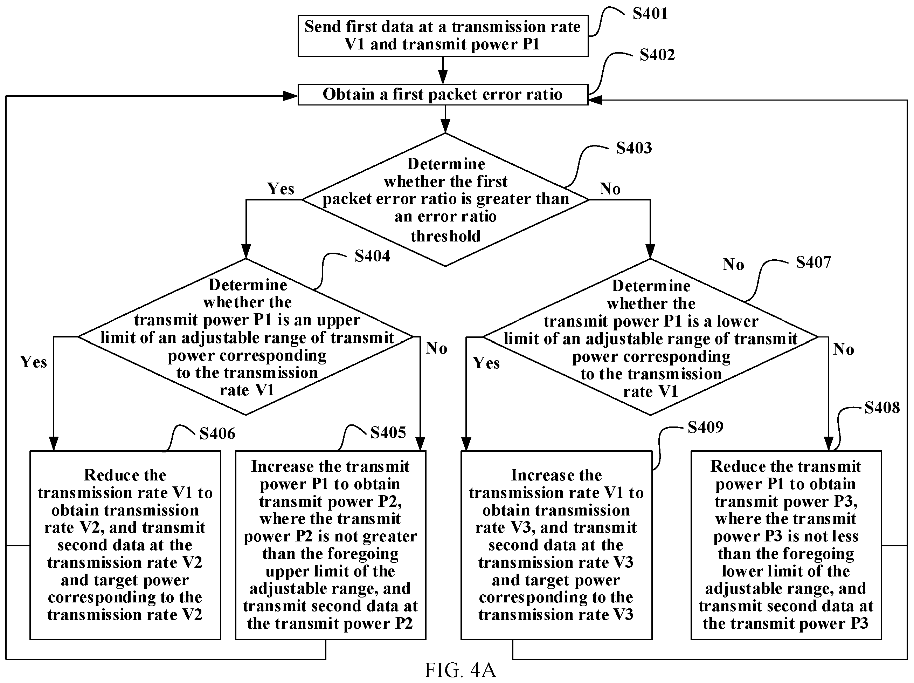

FIG. 4A is a flow chart of a data transmission technical solution in which when a throughput is optimal, a transmission rate corresponding to a maximum throughput is determined by real-time adjustment of a packet error ratio, and when the transmission rate is determined, the transmit power is adjusted in real time based on the received packet error ratio, so that data is transmitted at minimum transmit power to reduce power consumption according to an embodiment of this application. A terminal device is used as an execution entity, and the method includes the following steps.

S401: Send first data at a transmission rate V1 and transmit power P1.

In some embodiments, the transmission rate V1 and the transmit power P1 for sending the first data may be a transmission rate corresponding to an initial modulation order that satisfies signal quality in a current environment and initial transmit power that the terminal device and a network device negotiate. For example, the initial modulation order is MCS6, the data is transmitted at a transmission rate of 77.4 Mpbs corresponding to the initial modulation order MCS6 and target power of 14 dBm corresponding to MCS6.

In some other embodiments, the transmission rate V1 and the transmit power P1 for sending the first data may be a transmission rate and transmit power after the last adjustment. For example, the transmission rate V1 is the transmission rate of 77.4 Mpbs corresponding to MCS6, and the transmit power P1 is p6 less than the target power of 14 dBm.

S402: Obtain a first packet error ratio.

In some embodiments, the terminal device receives the first packet error ratio sent by the network device. The first packet error ratio is a packet error ratio obtained after the network device receives the first data. It may be understood that the first packet error ratio is a packet error ratio in a current network and wireless environment that can reflect current signal quality.

S403: Determine whether the first packet error ratio is greater than an error ratio threshold.

It may be understood that the error ratio threshold is an indicator to ensure a throughput during data transmission, and is a threshold set by a negotiation based on a protocol during transmission between the terminal device and the network device. The terminal device adjusts transmit power at a transmission rate that currently satisfies an optimal throughput based on the received first packet error ratio that reflects the current environment and the error ratio threshold. If the obtained first packet error ratio is less than the error ratio threshold, it indicates that a throughput obtained by transmitting data at the transmit power P1 and a throughput obtained by transmitting data at the target power are on a same order. Then it can be determined whether transmission can be alternatively performed by transmitting at low transmit power.

It may be understood that each transmission rate (modulation order) may have an adjustable range of transmit power. The range specifies an upper limit and a lower limit of adjustable transmit power when data is transmitted at the transmission rate corresponding to the modulation order. For example, the target power corresponding to each modulation order shown in the foregoing Table 2 is the upper limit of the adjustable transmit power.

Therefore, after the received packet error ratio is compared with the error ratio threshold, it needs to be determined whether the transmit power can be adjusted, because when data is transmitted at the current transmission rate, the power consumption can be minimized only when the transmit power is adjusted to close to the error ratio threshold. In addition, when data is transmitted in a case that a specific transmission rate (current modulation order) and a lower limit of corresponding transmit power (minimum transmit power) are satisfied, a received maximum packet error ratio is less than or equal to the error ratio threshold. In this case, when the data needs to be transmitted at a transmission rate (higher modulation order) greater than the transmission rate, and when a received minimum packet error ratio is greater than the error ratio threshold, the current transmission rate may be considered to be a transmission rate corresponding to a maximum throughput. When data is transmitted in a case that a specific transmission rate (current modulation order) and an upper limit of corresponding transmit power (maximum transmit power) are satisfied, a received minimum packet error ratio is greater than or equal to the error ratio threshold. In this case, the current transmission rate does not satisfy a requirement of the maximum throughput. Therefore, the transmission rate needs to be reduced to transmit data at the transmission rate corresponding to the maximum throughput. Therefore, after the packet error ratio is received, whether the current transmit power is the corresponding upper and lower limits needs to be determined, to determine whether the transmission rate needs to be adjusted first, and then whether the transmit power can be adjusted.

When the received packet error ratio is greater than the error ratio threshold, S404 is performed to determine whether the transmit power P1 reaches the upper limit. When the received packet error ratio is less than the error ratio threshold, S407 is performed to determine whether the transmit power P1 reaches the lower limit.

For example, if the error ratio threshold is 10% and the first packet error ratio is 5%, then the first packet error ratio of 5% is less than the error ratio threshold of 10%, step S407 is performed. For another example, the first packet error ratio is 11%, then the first packet error ratio of 11% is greater than the error ratio threshold of 10%, step S404 is performed.

S404: Determine whether the transmit power P1 reaches the upper limit of the adjustable range of the transmit power corresponding to the transmission rate V1.

In some embodiments, if the transmit power P1 reaches the upper limit of the adjustable transmit power corresponding to the transmission rate V1, it indicates that the packet error ratio cannot be reduced by increasing the transmit power P1 in this case. In other words, it is also indicated that in a current wireless and network environment, the current transmission rate is not the transmission rate corresponding to the optimal throughput, and the throughput cannot be ensured when transmitting at the current transmission rate V1. For example, as shown in FIG. 2, Vb is less than a rate corresponding to the transmission rate V1. In this case, step S406 may be performed to reduce the transmission rate V1. If the transmit power P1 does not reach the upper limit of the adjustable transmit power corresponding to the transmission rate V1, it indicates that the packet error ratio may be alternatively reduced by increasing the transmit power. In this case, step S405 may be performed to increase the transmit power P1.

For example, the transmit power P1 is the target power of 14 dBm at the transmission rate V1 of MCS6. In this case, the transmit power cannot be increased, and step S406 is performed. For another example, the transmit power P1 is p6, and p6 is less than the target power of 14 dBm corresponding to MCS6, step S405 is performed.

S405: Increase the transmit power P1 to obtain transmit power P2, where the transmit power P2 is not greater than the foregoing upper limit of the adjustable range, and transmit second data at the transmit power P2.

In some embodiments, the transmit power P1 is increased. In this case, an increased transmit power P1 is used as transmit power to transmit the second data, to transmit the second data at the transmit power P2. The transmit power is then adjusted based on a packet error ratio obtained after the second data is transmitted. It may be understood that an adjustment step of the transmit power can be set, for example, 0.5 dB or 0.25 dB each adjustment. It may be understood that the obtained transmit power P2 is a value within the adjustable range of the transmit power corresponding to the current transmission rate.

For example, a specific value of p6 corresponding to the transmit power P1 is 13 dBm, and the adjustment step of the transmit power is 0.5 dB, then p6 corresponding to the transmit power P1 is increased to obtain the transmit power P2 of p6' and 13.5 dBm, and p6' is used as the transmit power P2 to transmit the second data.

S406: Reduce the transmission rate V1 to obtain transmission rate V2, and transmit the second data at the transmission rate V2 and target power corresponding to the transmission rate V2.

It may be understood that after the transmission rate changes, the transmit power may be continued to be adjusted, based on the foregoing method and the obtained packet error ratio, within the adjustable range of the transmit power corresponding to the transmission rate V2. In this way, after the transmission rate of the optimal throughput is determined, transmission is performed at minimum transmit power while a specific packet error ratio is ensured, thereby reducing power consumption.

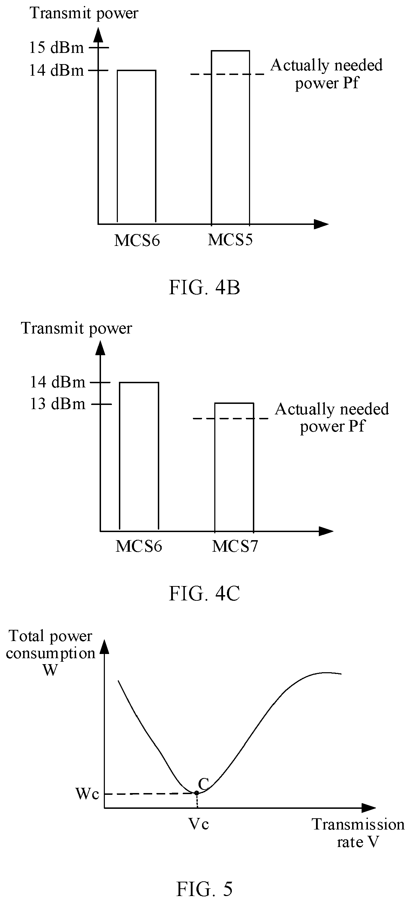

For example, the transmit power P1 is the target power of 14 dBm corresponding to MCS6, and the transmit power P1 cannot be increased. In this case, the transmission rate is reduced. To be specific, the transmission rate corresponding to MCS5 may be used as the transmission rate V2 to transmit the second data, and the data is transmitted at the target power of 15 dBm corresponding to MCS5. A throughput in this case may be greater than a throughput corresponding to MCS6 and corresponding target power. If a packet error ratio obtained by transmitting data at the target power of 15 dBm corresponding to MCS5 is less than the error ratio threshold of 10%, it indicates that MCS5 is transmission rate with maximum throughput. Therefore, the transmit power may be continued to be adjusted base on the packet error ratio, otherwise the transmission rate needs to be reduced. For example, FIG. 4B shows that after MCS6 is adjusted to MCS5, and after data is transmitted at the target power, the obtained packet error ratio is continued to be compared with the error ratio threshold. Assuming that MCS5 is the transmission rate corresponding to the maximum throughput, the transmit power may continue to be adjusted in this case, so that data can be transmitted at transmit power that is actually needed power Pf less than the target power, thereby reducing power consumption when a transmission rate is low.

S407: Determine whether the transmit power P1 reaches the lower limit of the adjustable range of the transmit power corresponding to the transmission rate V1.

In some embodiments, if the packet error ratio is less than the error ratio threshold, and the transmit power P1 reaches the lower limit of the transmission rate V1 corresponding to the adjustable transmit power, it indicates that signal quality is particularly good in the current network environment. In this case, the transmission rate needs to be adjusted, to test whether the current transmission rate is the transmission rate corresponding to the optimal throughput in the current network environment, because an error rate when data is transmitted at a larger transmission rate needs to greater than the error ratio threshold, to determine that the current transmission rate is the transmission rate corresponding to the maximum throughput. In this case, step S409 may be performed to increase the transmission rate V1. If the transmit power P1 does not reach the lower limit of the adjustable transmit power corresponding to the transmission rate V1, it indicates that the transmit power can be alternatively reduced when the packet error ratio is less than the error ratio threshold. In this case, step S408 may be performed to reduce the transmit power P1.

For example, when the packet error ratio is less than the error ratio threshold, the original transmit power P1 is a lower limit Pv of an adjustable range of transmit power of a transmission rate V1MCS6. In this case, the transmit power cannot be reduced, and step S409 is performed. For another example, if the original transmit power P1 is p6, and p6 is greater than Pv, S408 is performed.

S408: Reduce the transmit power P1 to obtain transmit power P3, where the transmit power P3 is not less than the foregoing lower limit of the adjustable range, and transmit the second data at the transmit power P3.

In some embodiments, the transmit power P1 is reduced to obtain the transmit power P3. In this case, the reduced transmit power P1 is used as the transmit power to transmit the second data, to transmit the second data at the transmit power P3. It may be understood that an adjustment step of the transmit power can be set, for example, 0.5 dB or 0.25 dB each adjustment. It may be understood that the obtained transmit power P3 is a value within the adjustable range of the transmit power corresponding to the current transmission rate.

For example, when the transmit power P1 is p6, a corresponding value is 13 dBm, and the adjustment step of the transmit power is set to 0.5 dB, then the transmit power P1 is reduced to obtain a value of 12.5 dBm corresponding to the transmit power P2 of p6'. In this case, p6' is not less than the lower limit Pv of the adjustable range of the transmit power corresponding to MCS6. The transmit power is then adjusted based on a packet error ratio obtained after the second data is transmitted.

S409: Increase the transmission rate V1 to obtain transmission rate V3, and transmit the second data at the transmission rate V3 and target power corresponding to the transmission rate V3.

It may be understood that after the transmission rate changes, if data is transmitted at the transmission rate V3 and target power corresponding to the transmission rate V3, the packet error ratio is greater than the error ratio threshold, it indicates that the transmission rate before adjustment is the transmission rate corresponding to the maximum throughput, and then the transmission rate may be reduced later. If data is transmitted at the transmission rate V3 and the target power corresponding to the transmission rate V3, the packet error ratio is less than the error ratio threshold, then the transmit power may be adjusted to check whether there is transmit power that enables the packet error ratio to be a preset packet error rate. Then, the transmit power may be adjusted, based on the method of adjusting the transmission rate V1 and the transmit power P1, within an adjustable range of the transmit power corresponding to the transmission rate V3 based on the obtained packet error ratio. In this way, when the optimal throughput is ensured, data is transmitted at minimum transmit power while a specific packet error ratio is ensured, thereby reducing power consumption.

For example, the original transmit power P1 reaches the lower limit Pv corresponding to MCS6, then the transmit power P1 cannot be reduced. In this case, the transmission rate is increased. To be specific, the transmission rate corresponding to MCS7 may be used as the transmission rate V3 to transmit the third data, and the data is transmitted at the target power of 13 dBm corresponding to MCS7. Then the transmit power is continued to be adjusted based on the packet error ratio. For example, FIG. 4C shows that after MCS6 is adjusted to MCS7, and after data is transmitted at the target power, the obtained packet error ratio is continued to be compared with the error ratio threshold. If the obtained packet error ratio is greater than the error ratio threshold, the transmission rate is reduced, otherwise, the transmit power is continued to be adjusted, so that data can be transmitted at transmit power that is the actually needed power Pf less than the target power, thereby reducing power consumption when a transmission rate is high.

It may be understood that a performance sequence of step S401 to step S409 above is only an example. In some other embodiments, another performance sequence may also be used, and some steps may be split or combined, which is not limited herein.

It may be understood that the upper limit and lower limit of the transmit power corresponding to the transmission rate described in each embodiment of this application may be a specific numerical value or a numerical value range, for example, the upper limit is in a range of 14.8 dBm to 15.2 dBm, which is not limited herein. In addition, the upper limit and lower limit corresponding to the transmit power are a numerical value range. The lower limit greater than the transmit power described in each embodiment of this application may be a maximum value (for example, 5.2 dBm) of the numerical value range (for example, 4.8 dBm to 5.2 dBm) greater than the lower limit of the transmit power, equal to the lower limit of the transmit power, and may be within the numerical value range of the lower limit of the transmit power. Further, the upper limit less than the transmit power described in each embodiment of this application may be a minimum value (for example, 14.8 dBm) of the numerical value range (for example, 14.8 dBm to 15.2 dBm) less than the upper limit of the transmit power, equal to the upper limit of the transmit power, and may be within the numerical value range of the upper limit of the transmit power.

It may be understood that if the received first packet error ratio is the error ratio threshold, the transmit power may not be continued to be adjusted and data is transmitted at the previous transmit power.

It may be understood that the transmission rate and transmit power are adjusted based on the received packet error ratio, so that power consumption is reduced when the throughput is ensured, which can be performed periodically based on preset time.

In may be understood that the foregoing method can ensure that when the optimal throughput is ensured, the transmit power is adjusted in real time during uplink transmission of data by the terminal device, thereby avoiding unnecessary data transmission power consumption of the terminal device.

Embodiment 2

It may be understood that, as mentioned above, in some cases that total transmission power consumption of terminal data needs to be ensured to be lowest, minimum transmit power of the transmission rates may be determined while a specific packet error ratio or a requirement of a signal-to-noise ratio is satisfied, and a transmission rate and minimum transmit power corresponding to minimum total power consumption are selected. Therefore, the transmit power is adjusted in real time during uplink transmission of data by the terminal device, thereby avoiding unnecessary data transmission power consumption of the terminal device.

It may be understood that total power consumption is related to the transmission rate. For example, FIG. 5 shows a relationship between a transmission rate and total power consumption for specific total uplink data needed to be transmitted and transmit power, for example, the total uplink data needed to be transmitted is 10 G and the transmit power is target power, according to some embodiments of this application. With an increase of the transmission rate, the total power consumption may be reduced. When the transmission rate is increased to Vc, the total power consumption is Wc. When the transmission rate continues to be increased, the total power consumption may be increased with the increase of the transmission rate. Therefore, there may be an extreme point "C". When the transmission rate is Vc, minimum total power consumption is W.

Descriptions are provided with reference to the following formulas of radio frequency current Ir, baseband current Ib, and uplink power consumption W.

$$\text{radio frequency current Ir:} \quad Ir = \varphi1(x) \quad \text{(Formula 2)}$$

baseband current Ib: $Ib = \varphi2(x)$(Formula 3)

$$W = \frac{z}{x}[Ir + Ib]*U = \frac{z}{x}[\varphi1(x) + \varphi2(x)]*U \text{(Formula 4)}$$

Formula (2) shows a correspondence between a transmission rate x and the radio frequency current Ir. $\varphi1$ is a mapping relationship between the transmission rate x and the radio frequency current Ir. Because the transmission rate x is determined, and the mapping relationships between the transmission rates and the transmit power is determined, the radio frequency current Ir is determined.

Formula (3) shows a correspondence between the transmission rate x and baseband current Ib. $\varphi2$ is a mapping relationship between the transmission rate x and the baseband current Ib. For a fixed transmission rate, there may be fixed baseband current.

Formula (4) shows a correspondence between the radio frequency current and the baseband current and the uplink power consumption W when a radio frequency component is under a constant voltage. z is total amount of transmitted data.

In some embodiments, when the mapping relationships between the transmission rates and the transmit power are that maximum transmit power (target power) corresponds to the transmission rates, total power consumption corresponding to the transmission rates is calculated according to the foregoing formula (4), and a transmission rate and the target power of minimum total power consumption selected are used for data transmission. However, it is not considered that data can be transmitted at the transmission rates and transmit power less than the target power.

Because a wireless and network environment changes in real time, in a transmission process of transmitting data, minimum transmit power that satisfies specific transmission quality when data is transmitted at the transmission rates can be obtained based on a received signal-to-noise ratio that reflects quality of the current wireless and network environment, thereby selecting the transmission rate and corresponding minimum transmit power of the minimum total power consumption when total power consumption of transmitted total data is the lowest.

The minimum transmit power satisfying the target signal-to-noise ratios can be determined, based on the obtained transmit power of the received signal-to-noise ratio, when the data is transmitted at the transmission rates. The target signal-to-noise ratio is the minimum signal-to-noise ratio mentioned in the explanation of the foregoing term, which can theoretically ensure that a received data packet error rate is less than or equal to a specific threshold (for example, 10% or 0%) when data is transmitted at a corresponding transmission rate in a current environment.

With reference to the foregoing formula (2) and formula (4), it can be found that when the mapping relationships between the transmission rates and the transmit power are changed, the transmission rate corresponds to the minimum transmit power that satisfies a specific packet error ratio or a requirement of a signal-to-noise ratio. For a same transmission rate, because determined minimum transmit power is less than the target power, Ir in formula (2) may be reduced. Because the transmission rate does not change, transmission time does not change, therefore, total power consumption in formula (4) may be further reduced. The total power consumption reduced is different for different transmission rates. Therefore, when satisfying the specific packet error ratio or the requirement of the signal-to-noise ratio, the minimum transmit power corresponding to the transmission rates is determined. Then the transmission rate and the corresponding minimum transmit power of the minimum total power consumption are selected based on the minimum total power consumption, thereby further saving power of a terminal device.

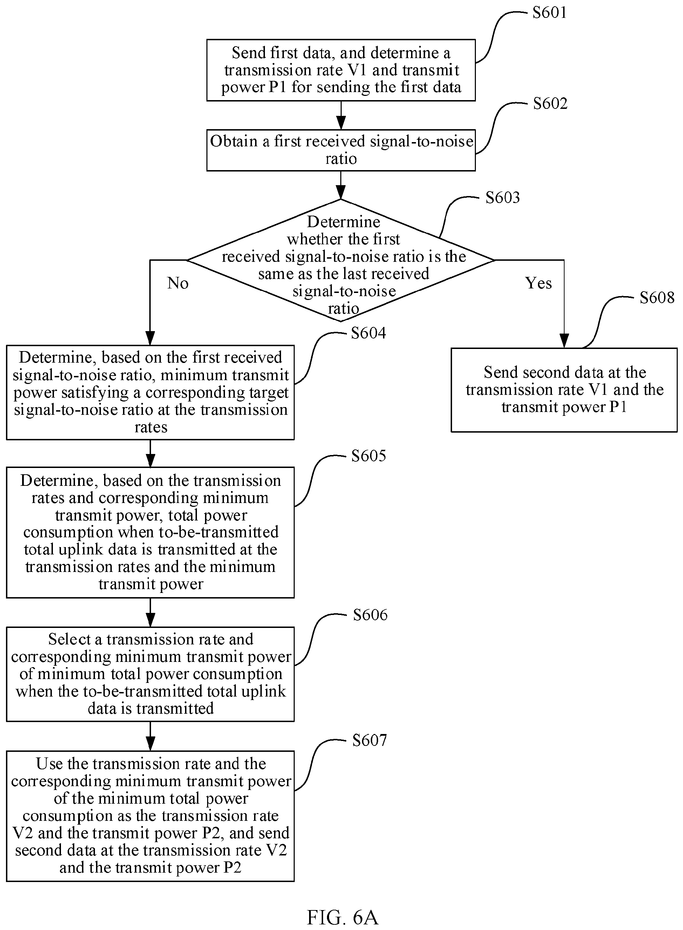

FIG. 6A is a flow chart of a power consumption control technical solution for transmitting data at minimum transmit power that satisfies a requirement of a specific signal-to-noise ratio when minimum total power consumption is ensured according to an embodiment of this application. A change of the signal-to-noise ratio is determined first. If the signal-to-noise ratio does not change, it indicates that a current wireless and network environment does not change, and data can be transmitted based on a previous transmission rate and transmit power. If the signal-to-noise ratio changes, it indicates that the current wireless and network environment changes, and a transmission rate of minimum total power consumption and minimum transmit power corresponding to the transmission rate are needed to be found, to transmit next data at the found transmission rate and the minimum transmit power corresponding to the transmission rate. A terminal device is used as an execution entity, and the method includes the following steps.

S601: Send first data, and determine a transmission rate V1 and transmit power P1 for sending the first data.

In some embodiments, the transmission rate V1 and the transmit power P1 for sending the first data may be a transmission rate corresponding to an initial modulation order that satisfies signal quality in a current environment and initial transmit power that the terminal device and a network device negotiate. For example, the initial modulation order is MCS5, the data is transmitted at a transmission rate of 68.8 Mpbs corresponding to the initial modulation order MCS5 and target power of 15 dBm corresponding to MCS5.

In some other embodiments, the transmission rate V1 and the transmit power P1 for sending the first data may be a transmission rate and transmit power after the last adjustment. For example, the data is transmitted at the transmission rate V1 that is the transmission rate of 68.8 Mpbs corresponding to MCS5, and the transmit power P1 that is 14 dBm less than the target power of 15 dBm.

S602: Obtain a first received signal-to-noise ratio.

In some embodiments, the terminal device receives the first received signal-to-noise ratio from the network device. The first received signal-to-noise ratio is a received signal-to-noise ratio obtained by the network device after receiving the first data. It may be understood that the first received signal-to-noise ratio is a received signal-to-noise ratio in a current network and wireless environment that can reflect current signal quality.

For example, the transmit power P1 is 14 dBm. In the current wireless and network environment, vacuum decay is 69 dB, and a noise level of the network device is -80 dBm, so that the received signal-to-noise ratio (first received signal-to-noise ratio) in the current environment can be determined to be 25 dB.

S603: Determine whether the first received signal-to-noise ratio is the same as the last received signal-to-noise ratio.

It may be understood that if the first received signal-to-noise ratio is the same as the last received signal-to-noise ratio, it indicates that the wireless and network environment does not change, then there is no need to adjust the transmission rate and transmit power. S608 is performed to send second data based on an original transmission rate and transmit power. If the first received signal-to-noise ratio is different from the last received signal-to-noise ratio, it indicates that the wireless and network environment changes, the transmission rate and transmit power are needed to be adjusted. S604 is performed.

S604: Determine, based on the first received signal-to-noise ratio, minimum transmit power satisfying a corresponding target signal-to-noise ratio at the transmission rates.

In some embodiments, when the network and the wireless environment is determined, there is a linear relationship between the target signal-to-noise ratio and the corresponding minimum transmit power. Specifically, minimum transmit power equals to target signal-to-noise ratio plus difference. The difference can be obtained by a difference between the transmit power P1 and the first received signal-to-noise ratio. It may be understood that the difference is different when the network and the wireless environment changes.

It should be explained that when the needed minimum transmit power is calculated to be greater than the target power corresponding to the transmission rates, it indicates that data cannot be transmitted at the transmission rate in the current environment, so that the transmission rate where the minimum transmit power is greater than the target power is not considered as a transmission rate corresponding to minimum total power consumption. In other words, total power consumption when data is transmitted at the transmission rate where the minimum transmit power is greater than the target power and the corresponding power does not need to be calculated.

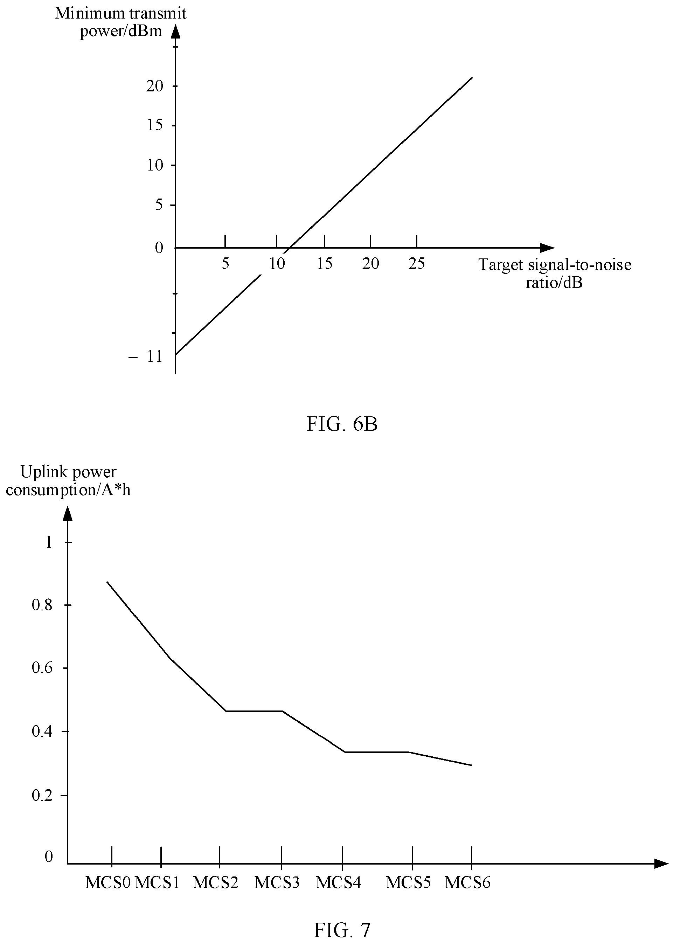

For example, the transmit power P1 is 14 dBm and the first received signal-to-noise ratio is 25 dB. FIG. 6B shows that in a determined wireless and network environment, that is, vacuum decay is 69 dB, noise is -80 dBm, the linear relationship between the target signal-to-noise ratio and the minimum transmit power is that minimum transmit power equals to target signal-to-noise ratio -11 dB. Table 3 shows minimum transmit power corresponding to MCS0 to MCS9 calculated based on the linear relationship between the target signal-to-noise ratio and the minimum transmit power described above.

Table 3

| Modulation order | QAM order | Target signal-to-noise ratio SNRm | Minimum transmit power (dBm) |
|---|---|---|---|
| MSC0 | BPSK | 5 | -6 |
| MSC1 | QPSK | 10 | -1 |
| MSC2 | QPSK | 13 | 2 |
| MSC3 | 16QAM | 16 | 5 |
| MSC4 | 16QAM | 19 | 8 |
| MSC5 | 64QAM | 22 | 11 |
| MSC6 | 64QAM | 25 | 14 |
| MSC7 | 64QAM | 27 | 16 |
| MSC8 | 256QAM | 30 | 19 |
| MSC9 | 256QAM | 32 | 21 |

Comparing Table 2 and Table 3, it can be found that in the current environment, when the modulation order is greater than MCS7, which are MCS7 to MCS9 in the table, the minimum transmit power is greater than the target power, which indicates that transmission rates corresponding to MCS7 to MCS9 cannot be reached in the current environment, so that MCS7 to MCS9 are not considered as the transmission rates corresponding to the minimum total power consumption.

S605: Determine, based on the transmission rates and the corresponding minimum transmit power, total power consumption when total to-be-transmitted uplink data is transmitted at the transmission rates and the minimum transmit power.

It may be understood that the total to-be-transmitted uplink data changes in real time. During data transmission, sometimes when transmission is started, the total to-be-transmitted uplink data is total data, for example, file data with 10 G in FIG. 1. When transmitted to the middle, the total to-be-transmitted uplink data is remaining data to be transmitted, for example, remaining file data with 5 G.

In some embodiments, after the minimum transmit power that satisfies the corresponding target signal-to-noise ratio and that is at the transmission rates is determined, the total power consumption corresponding to the transmission rates and the minimum transmit power is obtained based on baseband current parameters preset in the terminal device for the transmission rates and radio frequency current parameters corresponding to the determined minimum transmit power value, as well as the foregoing formula (4).

For example, baseband current Ib parameters (for example, Table 4) corresponding to each modulation order MCS and radio frequency current Ir parameters (for example, Table 5) corresponding to the transmit power are set in advance in the terminal device. Calculation is performed based on an actual total amount of transmitted data according to formula (4), the transmission rate, the baseband current Ib, and the radio frequency current corresponding to the minimum transmit power corresponding to each modulation order MCS are substituted to calculate the total uplink power consumption corresponding to each modulation order. For example, the total to-be-transmitted uplink data is 1 G, for MCS6, the corresponding transmission rate is 77.4 Mbps (shown in Table 1), the corresponding baseband current is 179 mA (shown in Table 4), the minimum transmit power is 14 dBm (shown in Table 3), the corresponding radio frequency current is 61.81 mA (shown in Table 5). Because voltage is constant, the voltage may not be considered. The power consumption can be calculated as 0.326 Ah according to formula (4), and the total power consumption corresponding to other modulation orders can be obtained accordingly. FIG. 7 shows uplink power consumption corresponding to each modulation order where minimum transmit power does not exceed target power.

**Table 4**

| Modulation order | QAM order | Baseband current (mA) |
|---|---|---|
| MSC0 | BPSK | 101 |
| MSC1 | QPSK | 140 |
| MSC2 | QPSK | 140 |
| MSC3 | 16QAM | 179 |
| MSC4 | 16QAM | 179 |
| MSC5 | 64QAM | 208 |
| MSC6 | 64QAM | 208 |
| MSC7 | 64QAM | 208 |
| MSC8 | 256QAM | 243 |
| MSC9 | 256QAM | 243 |

**Table 5**

| Transmit power (dBm) | Radio frequency current (mA) |
|---|---|
| 0 | 2.46 |
| 2 | 3.90 |
| 4 | 6.18 |
| 6 | 9.80 |
| 8 | 15.53 |
| 10 | 24.61 |
| 12 | 39.00 |

(continued)

| Transmit power (dBm) | Radio frequency current (mA) |
|---|---|
| 14 | 61.81 |
| 16 | 97.96 |
| 18 | 155.26 |
| 20 | 246.07 |
| 22 | 390.00 |

S606: Select a transmission rate and corresponding minimum transmit power of minimum total power consumption when the total to-be-transmitted uplink data is transmitted.

For example, it can be learnt from FIG. 7 that when the modulation order is MCS6, the total power consumption is minimum. Therefore, the transmission rate and the corresponding minimum transmit power of the minimum total power consumption are the transmission rate and the minimum transmit power corresponding to the modulation order MCS6.

S607: Use the transmission rate and the corresponding minimum transmit power of the minimum total power consumption as the transmission rate V2 and the transmit power P2, and send the second data at the transmission rate V2 and the transmit power P2.

For example, the transmission rate and the minimum transmit power corresponding to the modulation order MCS6 is used as the transmission rate V2 and the transmit power P2 to send the second data.

S608: Send the second data at the transmission rate V1 and the transmit power P1.

It may be understood that a performance sequence of step S601 to step S608 above is only an example. In some other embodiments, another performance sequence may also be used, and some steps may be split or combined, which is not limited herein.

It may be understood that the transmission rate and transmit power are adjusted based on the received signal ratio, so that total power consumption is reduced when the total to-be-transmitted uplink data is transmitted, which can be performed periodically based on preset time.

It may be understood that there is no requirement for transmission time. While that the packet error ratio or the signal-to-noise ratio satisfies a specific threshold is ensured, the power consumption is further reduced based on original transmission at the target power, thereby saving power. For example, when power of an electronic device of a user is low, the user can enable the function through a corresponding function button to transmit at the lowest total power consumption. Alternatively, when the power of the electronic device of the user is low, the electronic device automatically turns on the button including the function. For example, when the electronic device is switched to a power saving mode, a transmission mode with the lowest total power consumption is started, thereby saving power and prolonging battery life. It may be understood that because the baseband current parameters and the radio frequency current parameters can be set in advance in the electronic device, it is easy to operate.

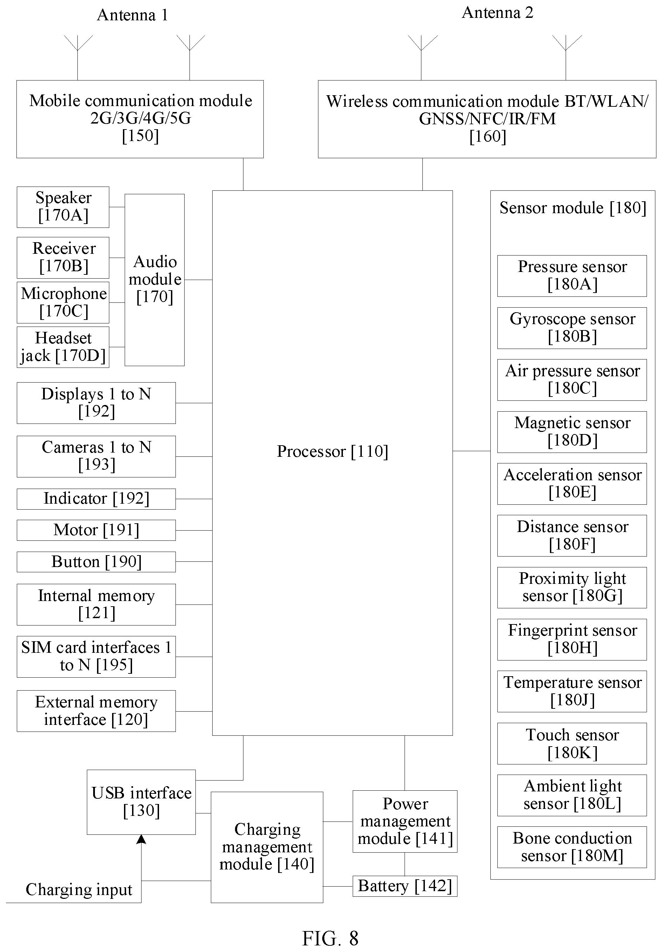

FIG. 8 is a schematic diagram of a hardware structure of a mobile phone 100 according to an embodiment of this application. In FIG. 8, similar members have same reference signs. As shown in FIG. 8, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, an air pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It may be understood that an example structure in this embodiment of the present invention does not constitute a specific limitation on the mobile phone 100. In some other embodiments of this application, the mobile phone 100 may include more or fewer members than those shown in the figure, or some members may be combined, or some members may be split, or different member arrangements are used. Members shown in the figure may be implemented by hardware, software, or a combination of software and hardware.

The processor 110 may include one or more processing units, for example, a processing module or a processing circuit of a central processing unit CPU (Central Processing Unit), a graphics processing unit GPU (Graphics Processing Unit), a digital signal processor DSP (Digital Signal Processor), a micro-programmed control unit MCU (Micro-programmed Control Unit), an AI (artificial Intelligence, Artificial Intelligence) processor, or a field programmable gate array FPGA (Field Programmable Gate Array). Different processing units may be separate components, or may be integrated into one or more processors.

A memory may be configured to store data, software program, and modules. The memory may be a volatile memory (Volatile Memory), for example, a random access memory (Random-Access Memory, RAM); or may be a non-volatile memory (Non-Volatile Memory), for example, a read-only memory (Read-Only Memory, ROM), a flash memory (Flash Memory), a hard disk drive (Hard Disk Drive, HDD), or a solid-state drive (Solid-State Drive, SSD); or may be a combination of the foregoing types of memories, or may be a removable storage medium, for example, a secure digital (Secure Digital, SD) memory card.

The charging management module 140 may include the battery 142, the power management module 141, and the like. The power management module 141 is configured to manage charging of power supply and the power supply to another module. The charging management module 140 is configured to receive charging input from a charger. The power management module 141 is connected to the battery 142, the charging management module, and the processor 110.

The mobile communication module 150 may include, but is not limited to, an antenna, a power amplifier, a filter, a low noise amplifier (low noise amplifier, LNA), and the like. The mobile communication module 150 may provide solutions applied to the mobile phone 100 for wireless communication including 2G/3G/4G/5G and the like. The mobile communication module 150 may receive an electromagnetic wave by using the antenna, perform processing such as filtering and amplification on the received electromagnetic wave, and transfer the electromagnetic wave to the modem processor for demodulation. The mobile communication module 150 may further amplify a signal obtained after modulation by the modem processor, and convert an amplified signal into an electromagnetic wave for radiation through the antenna. In some embodiments, at least some function modules of the mobile communication module 150 may be arranged in the processor 110. In some embodiments, at least some of the functional modules of the mobile communication module 150 may be disposed in a same component as at least some of modules of the processor 110.

The wireless communication module 160 may include an antenna, and achieve transmission and receiving of electromagnetic waves through the antenna. The wireless communication module 160 may provide a solution applied to the mobile phone 100 for wireless communication including a wireless local area network (Wireless Local Area Networks, WLAN) (such as a wireless fidelity (Wireless Fidelity, Wi-Fi) network), Bluetooth (Bluetooth, BT), and a global navigation satellite system (Global Navigation Satellite System, GNSS), frequency modulation (Frequency Modulation, FM), a near field communication (Near Field Communication, NFC) technology, an infrared (Infrared, IR) technology, and the like. The mobile phone 100 may communicate with a network and another device through wireless communication technologies.

In some embodiments, the mobile communication module 150 and the wireless communication module 160 of the mobile phone 100 may be alternatively located in a same module.

The camera 193 is configured to capture a still image or a video. A scene is projected to a photosensitive element by using an optical image generated by a lens. The photosensitive element converts an optical signal into an electrical signal and then transmits the electrical signal to the ISP (Image Signal Processor, Image signal processor) to convert the electrical signal into a digital image signal. The mobile phone 100 may implement a photographing function by using the ISP, the camera 193, the video codec, the GPU (Graphic Processing Unit, Graphic Processing Unit), the display, the application processor, and the like. There may be N camera(s), and N is a positive integer.

The display 194 includes a display panel. The display panel may use a liquid crystal display (Liquid Crystal Display, LCD), an organic light-emitting diode (Organic Light-emitting Diode, OLED), an active matrix organic light-emitting diode or an active-matrix organic light-emitting diode (Active-matrix Organic Light-emitting Diode, AMOLED), a flex light-emitting diode (Flex Light-emitting Diode, FLED), a Mini LED, a Micro LED, a Micro OLED, a quantum dot light-emitting diode (Quantum Dot Light-emitting Diodes, QLED), or the like. There may be N display (s), and N is a positive integer.

The audio module 170 may convert digital audio information into an analog audio signal to output, or convert analog audio input into a digital audio signal. The audio module 170 may be further configured to encode and decode the audio signal. In some embodiments, the audio module 170 may be disposed in the processor 110, or some functional modules in the audio module 170 may be disposed in the processor 110. The audio module 170 may include a speaker 170A, a telephone receiver 170B, a microphone 170C, and a headset jack 170D.

An interface module includes an external memory interface 120, a universal serial bus (Universal Serial Bus, USB) interface 130, a subscriber identification module (Subscriber Identification Module, SIM) card interface 195, and the like. There may be N SIM card interface(s), and N is a positive integer. The external memory interface may be configured to connect to an external storage card such as a Micro SD card, to extend a storage capability of the mobile phone 100. The external storage card communicates with the processor 110 through the external memory interface, to implement a data storage function. The universal serial bus interface is configured for the mobile phone 100 to communicate with another mobile phone. The subscriber identification module card interface is configured to communicate with an SIM card installed to the mobile phone 100, such as reading a phone number stored in the SIM card, or writing the phone number to the SIM card.

In some embodiments, the mobile phone 100 further includes a button 190, a motor 191, and an indicator 192 and the like. The button may include a volume key, an on/off key, and the like. The motor is configured to make the mobile phone 100 produce a vibration effect, for example, when the mobile phone 100 of a user receives a new IM APP message, to prompt the user to check the message. The indicator may include a laser indicator, a radio frequency indicator, an LED indicator, and the like.

It may be understood that an example structure in this embodiment of the present invention does not constitute a specific limitation on the mobile phone 100. In some other embodiments of this application, the mobile phone 100 may include more or fewer members than those shown in the figure, or some members may be combined, or some members may be split, or different member arrangements are used. Members shown in the figure may be implemented by hardware, software, or a combination of software and hardware.

Each embodiment of a mechanism disclosed in this application may be implemented in hardware, software, firmware, or a combination of these implementations. Embodiments of this application may be implemented as computer program or program code executed on a programmable system. The programmable system includes at least one processor, a storage system (including a volatile memory and a non-volatile memory, and/or a storage element), at least one input device, and at least one output device.

The program code may be used to input instructions to perform the functions described in this application and generate output information. The output information can be applied to one or more output devices in a known way. For a purpose of this application, a processing system includes any system having a processor such as a digital signal processor (DSP), a microcontroller, an application specific integrated circuit (ASIC), a microprocessor, or the like.

The program code may be implemented in a high-level procedural language or an object-oriented programming language to communicate with the processing system. The program code may be alternatively implemented in an assembly language or a machine language when needed. Actually, the mechanism described in this application is not limited to a scope of any particular programming language. In any case, the language can be a compiled language or an interpreted language.

In some cases, the disclosed embodiments may be implemented by software, hardware, firmware, or any combination thereof. The disclosed embodiments may be alternatively implemented as instructions carried by or stored on one or more transitory or non-transitory machine-readable (for example, computer-readable) storage media, and the instructions may be read or executed by one or more processors. For example, the instructions may be distributed through a network or other computer-readable media. Therefore, the machine-readable medium may include any mechanism used for storing or transmitting information in a machine (for example, computer) readable form, including but not limited to a floppy disk, an optical disc, an optical disk, a read-only memory (CD-ROMs), a magnetic optical disc, a read-only memory (ROM), a random access memory (RAM), an erasable programmable read-only memory (EPROM), an electrically erasable programmable read-only memory (EEPROM), a magnetic card or an optical card, a flash memory, or a tangible machine-readable memory used for transmitting information (such as a carrier, an infrared signal, and a digital signal) over the Internet to transmit propagation signals in the form of electricity, light, sound, or other forms. Therefore, the machine-readable medium includes any type of a machine-readable medium suitable for storing or transmitting an electronic instruction or information in the machine (for example, computer) readable form.

In the drawings, some structures or method features may be shown in a particular arrangement and/or sequence. However, it should be understood that such specific arrangement and/or sequence is not needed. Rather, in some embodiments, such features may be arranged in a different manner and/or sequence than shown in the illustrative drawings. In addition, the inclusion of structures or method features in a particular drawing does not imply that all embodiments need such features. In some embodiments, such features may not be included, or may be combined with other features.

It should be noted that each unit/module mentioned in each device embodiment of this application is a logical unit/module. Physically, a logical unit/module may be a physical unit/module, may alternatively be a part of a physical unit/module, and may still alternatively be implemented in a combination of a plurality of physical units/modules. Physical implementations of the logical units/modules are not the most important, combinations of functions implemented by the logical units/modules are a key to resolving technical problems proposed in this application. In addition, to highlight an innovative part of this application, the foregoing device embodiments of this application are not introduced into a unit/module that is not very closely related to resolving the technical problems proposed in this application, which does not indicate that another unit/module does not exist in the foregoing device embodiments.

It should be noted that in embodiments and specification of this patent, relational terms such as first and second are only used to distinguish one entity or operation from another entity or operation, and do not necessarily require or imply that there is any such actual relationship or sequence between these entities or operations. Moreover, the terms "include," "comprise," or any variation thereof are intended to cover a non-exclusive inclusion. Therefore, a process, a method, an object, or a device that includes a series of elements not only includes such elements, but also includes other elements not specified expressly, or may include inherent elements of the process, method, object, or device. In absence of more constraints, an element defined by the statement "includes a..." does not preclude existence of identical elements in the process, method, object, or device that includes the elements.

Although this application has been illustrated or described with reference to some preferred embodiments of this application, a person of ordinary skill in the art should understand that various modifications can be made to forms and details of embodiments without departing from the scope of this application wjhich is defined by the appended claims.

**Claims**

1. A data transmission method, applied to an electronic device, wherein the method comprises:

   transmitting (S601) first data at a first transmission rate and first transmit power;
   determining (S603) whether a network transmission status satisfies a first condition;
   in response to that the network transmission status does not satisfy the first condition, determining a second transmission rate and second transmit power that enable total transmission power consumption to satisfy a power consumption condition; and
   transmitting (S607) second data at the second transmission rate and the second transmit power, wherein the first condition comprises:

   a currently obtained (S602) first received signal-to-noise ratio is the same as a last obtained second received signal-to-noise ratio, wherein the first received signal-to-noise ratio is received from a network device that receives the first data; and
   the determining a second transmission rate and second transmit power that enable total transmission power consumption to satisfy a power consumption condition comprises:

   determining (S604), based on the first received signal-to-noise ratio, minimum transmit power that satisfies target signal-to-noise ratios corresponding to respective transmission rates ; and
   selecting (S606), from the transmission rates and the minimum transmit power corresponding to the transmission rates, the second transmission rate and the second transmit power that enable the total transmission power consumption to satisfy the power consumption condition, wherein the power consumption condition is to ensure a minimum total power consumption when the total to-be-transmitted uplink data is transmitted, wherein the total to-be-transmitted uplink data is remaining data to be transmitted within a preset time period.

2. The method according to claim 1, wherein the determining (S604), based on the first received signal-to-noise ratio, minimum transmit power that satisfies target signal-to-noise ratios corresponding to respective transmission rates and that is at respective transmission rates comprises:

   determining, based on a difference between the first received signal-to-noise ratio and the second transmit power, a linear relationship between the target signal-to-noise ratio and the minimum transmit power; and
   determining, based on the linear relationship, the minimum transmit power that satisfies the target signal-to-noise ratios corresponding to the transmission rates and that is at the transmission rates.

3. The method according to claim 1, wherein the selecting (S606) the second transmission rate and the second transmit power that enable the total transmission power consumption to satisfy the power consumption condition comprises: calculating respective total transmission power consumption when the data is transmitted at respective transmission rates and the minimum transmit power corresponding to respective transmission rates, using a transmission rate that is corresponding to the total transmission power consumption satisfying the power consumption condition and that is in the total transmission power consumption as the second transmission rate, and using minimum transmit power corresponding to the second transmission rate as the second transmit power.

4. An electronic device, comprising:

   one or more processors; and
   one or more memories, wherein the one or more memories store one or more programs, and when the one or more programs are executed by the one or more processors, the electronic device is enabled to perform the data transmission method according to any one of claims 1 to 3.

5. A computer-readable storage medium, wherein the storage medium stores instructions, and when the instructions are run on a computer, the computer is enabled to perform the data transmission method according to any one of claims 1 to 3.

**Patentansprüche**

1. Ein Datenübertragungsverfahren, das auf ein elektronisches Gerät angewendet wird, wobei das Verfahren Folgendes umfasst:

   Übertragung (S601) von ersten Daten mit einer ersten Übertragungsgeschwindigkeit und einer ersten Sendeleistung;
   Bestimmen (S603), ob ein Netzwerkübertragungsstatus eine erste Bedingung erfüllt;
   Als Reaktion darauf, dass der Netzwerkübertragungsstatus die erste Bedingung nicht erfüllt, Bestimmen einer zweiten Übertragungsgeschwindigkeit und einer zweiten Sendeleistung, die es ermöglichen, dass der gesamte Übertragungsenergieverbrauch eine Energieverbrauchsbedingung erfüllt; und
   Übertragung (S607) von zweiten Daten mit der zweiten Übertragungsgeschwindigkeit und der zweiten Sendeleistung, wobei
   die erste Bedingung umfasst:

   dass ein derzeit ermitteltes (S602) erstes empfangenes Signal-Rausch-Verhältnis identisch ist mit einem zuletzt ermittelten zweiten empfangenen Signal-Rausch-Verhältnis, wobei das erste empfangene Signal-Rausch-Verhältnis von einem Netzwerkgerät empfangen wird, das die ersten Daten empfängt; und
   das Bestimmen einer zweiten Übertragungsgeschwindigkeit und einer zweiten Sendeleistung, die es ermöglichen, dass der gesamte Übertragungsenergieverbrauch eine Energieverbrauchsbedingung erfüllt, umfasst:

   Bestimmen (S604) auf Basis des ersten empfangenen Signal-Rausch-Verhältnisses der minimalen Sendeleistung, die Ziel-Signal-Rausch-Verhältnisse erfüllt, die den jeweiligen Übertragungsgeschwindigkeiten entsprechen, und
   Auswählen (S606), aus den Übertragungsgeschwindigkeiten und der minimalen Sendeleistung, die den Übertragungsgeschwindigkeiten entsprechen, der zweiten Übertragungsgeschwindigkeit und der zweiten Sendeleistung, die es ermöglichen, dass der gesamte Übertragungsenergieverbrauch die Energieverbrauchsbedingung erfüllt, wobei
   die Energieverbrauchsbedingung darin besteht, einen minimalen Gesamtenergieverbrauch sicherzustellen, wenn die insgesamt zu übertragenden Uplink-Daten übertragen werden, wobei es sich bei den insgesamt zu übertragenden Uplink-Daten um verbleibende Daten handelt, die innerhalb eines vorgegebenen Zeitraums zu übertragen sind.

2. Das Verfahren nach Anspruch 1, wobei das Bestimmen (S604) auf Basis des ersten empfangenen Signal-Rausch-Verhältnisses der minimalen Sendeleistung, die Ziel-Signal-Rausch-Verhältnisse erfüllt, die den jeweiligen Übertragungsgeschwindigkeiten entsprechen und bei den jeweiligen Übertragungsgeschwindigkeiten liegt, Folgendes umfasst:

   Bestimmen einer linearen Beziehung zwischen dem Ziel-Signal-Rausch-Verhältnis und der minimalen Sendeleistung basierend auf einem Unterschied zwischen dem ersten empfangenen Signal-Rausch-Verhältnis und der zweiten Sendeleistung; und
   Bestimmen der minimalen Sendeleistung, die die Ziel-Signal-Rausch-Verhältnisse erfüllt, die den Übertragungsgeschwindigkeiten entsprechen und bei den Übertragungsgeschwindigkeiten liegt, basierend auf der linearen Beziehung.

3. Verfahren nach Anspruch 1, wobei das Auswählen (S606) der zweiten Übertragungsrate und der zweiten Sendeleistung, die es ermöglichen, dass der gesamte Übertragungsleistungsverbrauch die Verbrauchsbedingung erfüllt, Folgendes umfasst:
   die jeweilige Gesamtübertragungsleistungsverbrauch zu berechnen, wenn die Daten mit den jeweiligen Übertragungsraten und der jeweiligen minimalen Sendeleistung übertragen werden; die Übertragungsrate, die dem Gesamtübertragungsleistungsverbrauch entspricht, der die Verbrauchsbedingung erfüllt und im Gesamtübertragungsleistungsverbrauch liegt, als zweite Übertragungsrate zu verwenden; sowie die minimale Sendeleistung, die der zweiten Übertragungsrate entspricht, als zweite Sendeleistung zu verwenden.

4. Elektronisches Gerät, umfassend:

   einen oder mehrere Prozessoren; und

einen oder mehrere Speicher, wobei der oder die Speicher ein oder mehrere Programme speichern, und wenn das oder die Programme durch den oder die Prozessoren ausgeführt werden, wird das elektronische Gerät befähigt, das Datenübertragungsverfahren nach einem der Ansprüche 1 bis 3 auszuführen.

5. Computerlesbares Speichermedium, wobei das Speichermedium Anweisungen speichert und wenn die Anweisungen auf einem Computer ausgeführt werden, der Computer dazu befähigt wird, das Datenübertragungsverfahren nach einem der Ansprüche 1 bis 3 auszuführen.

**Revendications**

1. Procédé de transmission de données, appliqué à un dispositif électronique, ledit procédé comprenant :

la transmission (S601) de premières données à un premier débit de transmission et à une première puissance d'émission ;
la détermination (S603) de savoir si l'état de transmission du réseau satisfait à une première condition ;
en réponse au fait que l'état de transmission du réseau ne satisfait pas à la première condition, la détermination d'un second débit de transmission et d'une seconde puissance d'émission permettant que la consommation totale de puissance de transmission satisfasse à une condition de consommation d'énergie ; et
la transmission (S607) de deuxièmes données au second débit de transmission et à la seconde puissance d'émission, dans laquelle
la première condition comprend :

un premier rapport signal/bruit actuellement obtenu (S602) est identique à un dernier rapport signal/bruit obtenu en second, dans laquelle le premier rapport signal/bruit est reçu d'un dispositif réseau qui reçoit les premières données ; et
la détermination d'un second débit de transmission et d'une seconde puissance d'émission permettant une consommation totale de puissance de transmission satisfaisant à la condition de consommation d'énergie comprend :

la détermination (S604), sur la base du premier rapport signal/bruit reçu, de la puissance minimale d'émission qui satisfait aux rapports signal/bruit cibles correspondant aux débits de transmission respectifs ; et
la sélection (S606), parmi les débits de transmission et les puissances minimales d'émission correspondantes, du second débit de transmission et de la seconde puissance d'émission qui permettent à la consommation totale de puissance de transmission de satisfaire à la condition de consommation d'énergie, dans laquelle
la condition de consommation d'énergie vise à garantir une consommation totale minimale de puissance lorsque la totalité des données à transmettre en liaison montante est transmise, ladite totalité correspondant aux données restantes à transmettre dans une période prédéfinie.

2. Procédé selon la revendication 1, dans lequel la détermination (S604), sur la base du premier rapport signal/bruit reçu, de la puissance minimale d'émission qui satisfait aux rapports signal/bruit cibles correspondant aux débits de transmission respectifs et qui se trouve à ces débits, comprend :

la détermination, sur la base d'une différence entre le premier rapport signal/bruit reçu et la seconde puissance d'émission, d'une relation linéaire entre le rapport signal/bruit cible et la puissance minimale d'émission ; et
la détermination, sur la base de la relation linéaire, de la puissance minimale d'émission qui satisfait aux rapports signal/bruit cibles correspondant aux débits et qui est à ces débits de transmission.

3. Le procédé selon la revendication 1, dans lequel la sélection (S606) du second débit de transmission et de la seconde puissance d'émission permettant à la consommation totale de puissance de transmission de satisfaire la condition de consommation d'énergie comprend :
calculer la consommation totale de puissance de transmission respective lorsque les données sont transmises à chacun des débits de transmission et à la puissance d'émission minimale correspondant à chaque débit de transmission, utiliser un débit de transmission correspondant à la consommation totale de puissance de transmission satisfaisant la condition de consommation d'énergie et figurant parmi les consommations totales de puissance de transmission comme second débit de transmission, et utiliser la puissance d'émission minimale correspondant au second débit de transmission comme seconde puissance d'émission.

4.  Un dispositif électronique, comprenant :

    un ou plusieurs processeurs ; et
    une ou plusieurs mémoires, la ou les mémoires stockant un ou plusieurs programmes, et lorsque le ou les programmes sont exécutés par le ou les processeurs, le dispositif électronique est apte à exécuter le procédé de transmission de données selon l'une des revendications 1 à 3.

5.  Un support de stockage lisible par ordinateur, ledit support de stockage stockant des instructions qui, lorsqu'elles sont exécutées sur un ordinateur, permettent à celui-ci d'exécuter le procédé de transmission de données selon l'une des revendications 1 à 3.

FIG. 1

FIG. 2

FIG. 3

FIG. 4A

EP 4 376 477 B1

FIG. 4B

FIG. 4C

FIG. 5

S601

Send first data, and determine a transmission rate V1 and transmit power P1 for sending the first data

S602

Obtain a first received signal-to-noise ratio

S603

Determine whether the first received signal-to-noise ratio is the same as the last received signal-to-noise ratio

No

Yes

S608

Send second data at the transmission rate V1 and the transmit power P1

S604

Determine, based on the first received signal-to-noise ratio, minimum transmit power satisfying a corresponding target signal-to-noise ratio at the transmission rates

S605

Determine, based on the transmission rates and corresponding minimum transmit power, total power consumption when to-be-transmitted total uplink data is transmitted at the transmission rates and the minimum transmit power

S606

Select a transmission rate and corresponding minimum transmit power of minimum total power consumption when the to-be-transmitted total uplink data is transmitted

S607

Use the transmission rate and the corresponding minimum transmit power of the minimum total power consumption as the transmission rate V2 and the transmit power P2, and send second data at the transmission rate V2 and the transmit power P2

FIG. 6A

Minimum transmit
power/dBm

20

15

10

5

0

5     10    15    20    25    Target signal-to-noise
                                    ratio/dB

− 11

FIG. 6B

Uplink power
consumption/A*h

1

0.8

0.6

0.4

0.2

0

MCS0 MCS1  MCS2   MCS3   MCS4   MCS5  MCS6

FIG. 7

Antenna 1                                    Antenna 2

| Mobile communication module 2G/3G/4G/5G [150] | Wireless communication module BT/WLAN/ GNSS/NFC/IR/FM [160] |

Speaker [170A]

Receiver [170B]

Audio module [170]

Microphone [170C]

Headset jack [170D]

Displays 1 to N [192]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyroscope sensor [180B]

Air pressure sensor [180C]

Magnetic sensor [180D]

Acceleration sensor [180E]

Distance sensor [180F]

Proximity light sensor [180G]

Fingerprint sensor [180H]

Temperature sensor [180J]

Touch sensor [180K]

Ambient light sensor [180L]

Bone conduction sensor [180M]

USB interface [130]

Charging management module [140]

Power management module [141]

Battery [142]

Charging input

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211227082

- CN 101977097 A